(19) Europäisches Patentamt
European Patent Office
Office européen des brevets

(11) **EP 2 509 011 A1**

(12) **EUROPEAN PATENT APPLICATION**

(43) Date of publication:
**10.10.2012 Bulletin 2012/41**

(51) Int Cl.:
***G06F 17/50*** (2006.01)

(21) Application number: **12163404.2**

(22) Date of filing: **05.04.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.04.2011 NL 2006577**

(71) Applicant: **IMEC**
**3001 Leuven (BE)**

(72) Inventors:
• **Catthoor, Francky**
  **3001 Leuven (BE)**

• **Kaczer, Ben**
  **3001 Leuven (BE)**
• **Rodopoulos, Dimitrios**
  **3001 Leuven (BE)**
• **Valduga de Almeida Camargo, Vinicius**
  **3001 Leuven (BE)**
• **Bandhu Mahato, Swaraj**
  **3001 Leuven (BE)**

(74) Representative: **Krebs, Achim**
  **Haseltine Lake LLP**
  **Bezuidenhoutseweg 161**
  **2594 AG Den Haag (NL)**

(54) **Time and workload dependent circuit simulation**

(57)    An atomistic approach to introducing time-dependent variability into a circuit simulator in a realistic manner. The approach is based on previously proven physics of stochastic properties of individual gate oxide defects and their impact on operation of individual devices, such as FETs, within the circuit. Each individual device is assigned a number of defects on a statistical basis, and their degrading effect on a device characteristic, such as threshold voltage, is followed over a defined operation time and under realistic workloads. A performance metric of the circuit, such as a delay time, is analyzed by considering the effects of the degradation of the individual devices. The method of the invention is capable of following defects with widely distributed time scales (from fast to quasi-permanent), thus seamlessly integrating random telegraph noise (RTN) effects with bias temperature instability (BTI). The employment of existing industry-standard circuit simulator tools (10, 50, 60) ensures correct combination of the deterministic workload-dependent component with the stochastic modelling aspect while simultaneously incorporating interactions among different devices. The atomistic property of the utilized model allows the detection of workload dependency in performance metrics such as the delay of a circuit.

Figure 2

**Description**

<u>Field of the Invention</u>

The present invention relates to simulation of an electronic circuit by modelling time-varying characteristics of constituent devices of the circuit.

<u>Background of the Invention</u>

As semiconductor devices become highly scaled, in other words are scaled to smaller and smaller dimensions, various time-varying phenomena have become critical to reliability. Such time-varying phenomena include Bias Temperature Instability (BTI), Random Telegraph Noise (RTN) and Hot-Carrier Injection (HCI). These phenomena have a partly stochastic, partly deterministic basis: that is, they depend upon random events at the atomic level, but the probability of the events will partly depend on operating conditions such as voltage and temperature. Their effects tend to accumulate over the operating life of the devices, gradually degrading their characteristics and in turn the performance of circuits employing the semiconductor devices.

BTI includes two effects, Negative BTI or NBTI (which affects p-channel FETs (also called pMOS, below referred to as pFETs) and Positive NBTI or PBTI, which affects n-channel FETS (nMOS or nFETS).

NBTI, the more critical of the two effects, is linked to the presence of defects in the gate oxide of a pFET. Capture and emission of charge carriers at these defects (also called "traps") result in fewer or more charge carriers being available to contribute to current in the device, and captured charge carriers act as fixed charges in the gate; this influences the characteristics of the pFET such as its threshold voltage, that is, the voltage applied between gate and source ($V_{gs}$) sufficient to allow a current to flow between source and drain. As explained below, defects have inherent time constants for capture and emission, with some "slow" (taking a long time, other factors being equal) to capture or emit a charge-carrier, and others "fast". Note that these time constants are only average or expectation values, since the individual capture and emission events are stochastic. However, the probability of such capture and emission events is also dependent upon the voltage applied to the device, in other words the vertical electric field intensity, and also on temperature. The effect on threshold voltage of the pFET thus accumulates with time spent in the "on" state, resulting in a corresponding reduction in drain current. This reduction of current, in turn, makes the transistor slower to charge or discharge its load.

The result is a degradation over time of one or more performance metrics of a circuit containing the pFET. In the case of an inverter circuit, for example, the delay time will tend to increase. Turning off the pFET (applying a high gate-drain voltage) will reverse the polarity of the vertical electric field, altering the relative probabilities of capture and emission and allowing some recovery or "relaxation" from the degradation in threshold voltage. In practical operation of the device, the degree of recovery is dependent on the workload, in other words the duration and pattern of voltages applied to the gate; this makes it important to take into account the workload when modelling the effects of NBTI.

The combination of voltages and temperature applied to an individual transistor is referred to as "stress". In a large circuit, the stress on an individual transistor will depend on its location within the circuit architecture; this also means that certain transistors will have more effect on others on determining the circuit performance and on limiting its lifetime. For present purposes, the "lifetime" of a circuit may be regarded as the time for which it continues to operate within set limits of performance.

RTN is a phenomenon on a shorter time scale than BTI, but has come to be understood as another aspect of the same underlying mechanism. The individual capture and emission events, which collectively cause BTI, each produce a transitory change in drain current which (if measured on a sufficiently fast time scale) is observed as RTN.

HCI, on the other hand, is a distinct phenomenon affecting both pFETs and nFETs; in fact it is more of a concern for nFETs. As device sizes decrease, the lateral electric field intensity close to the drain in the channel of a FET (especially in short-channel transistors) can become high. Whilst a drain current is flowing (in other words during a switching of state of the transistor), "hot" (high-energy) charge carriers may collide with atoms in the channel, producing electron-hole pairs. Such hot carriers may become trapped and alter the threshold voltage and drain current in a similar way to that described for BTI. Once trapped, these charge carriers remain there so that, unlike BTI, the effect of HCI is cumulative regardless of the workload applied to the device.

It can be seen from the above that time-varying phenomena like BTI and HCI can alter multiple device characteristics simultaneously, with complex effects on circuit operation.

Meanwhile, another result of device scaling is that the initial variability of individual devices tends to increase, as distinct from the effects of time-varying phenomena. In particular the threshold voltage of individual transistors will differ due to inter-die and intra-die variations, which can include variations in channel length and width, line edge roughness, oxide layer thickness and dopant levels. This makes it still more important to be able to model accurately the effects of time-varying reliability issues, so that circuits can be designed with adequate margins to ensure sufficient lifetime without the need for over-conservative design rules.

Devices of relatively large feature sizes (e.g., above 100nm), employed in older technologies were assumed to behave identically in terms of time-varying phenomena such as BTI. This assumption had some validity since devices of older technologies have sufficient size and a large number of defects, thus exhibiting a uniform behaviour in terms of their reliability. Consequently, one device was typically sufficient to project a well-defined lifetime at each stress condition. With the downscaling of device dimensions, the number of defects per device decreases, and the stochastic behaviour of the defects becomes gradually more evident. For example, the effect on threshold voltage of a single electron charge increases as the feature size is reduced. As a consequence of that and of the stochastic nature of the defects, the projected lifetime spread drastically increases.

Attempts have been made in the prior art to take such reliability phenomena into account. In commercial reliability tools like RelXpert, each device is replaced by an aged equivalent, based on the input stress provided to the simulator. Then a simulation of the "aged" circuit is performed, thus indicating circuit degradation. There is no information provided about the runtime defect activity. Such approaches are unable to present a transient view of reliability phenomena.

Accordingly, it is an object of the invention to provide a method of simulating operation of a circuit by taking into account the stochastic behaviour of individual defects.

Summary of the Invention

According to a first aspect of the present invention, there is provided a method of simulating operation of an electronic circuit including at least one electronic device, a performance metric of the circuit varying in dependence on time and a workload applied to the circuit in a known relationship to a characteristic of the device, the device characteristic dependent in turn on charge-carrier capture and emission events which occur at capture and emission sites of the device with probabilities dependent on a voltage applied to the device, the method comprising: generating at least one instance of the circuit, each randomised with respect to the number and properties of said capture and emission sites of each device; and for each circuit instance: assigning initial states to the capture and emission sites of each device and an initial value to the device characteristic; simulating, for each individual site of each device, and for each of a defined series of time steps, the effect of capture and emission events on the device characteristic by: obtaining, from a runtime situation for the circuit, a value of the voltage applied to the device in the time step; comparing a randomly-generated value with the probabilities of a capture or emission event for the obtained voltage value, to determine whether a capture or emission event occurs in the time step; and updating the value of said device characteristic if a capture or emission event is determined to occur at the site in the time step; and calculating the performance metric for the circuit instance after any said time step, using said known relationship and said characteristic value of each device.

The capture and emission sites will normally be unintentional defects occurring in the device, for example in the gate oxide of a FET. However, capture and emission sites may be intentionally introduced in certain kinds of device during fabrication in order to influence one or more device characteristics, for example in charge-trapping memory devices.

Preferably, in the above method, the generating step further randomly assigns an impact for a capture or emission event on the device characteristic within a range according to a probability distribution, determined empirically for a given device technology, this impact being used in the updating step.

Circuit operation and performance metrics generally depend on the technology used to implement the devices. Thus, the generating step may assign values of the numbers and properties of the capture and emission sites within ranges determined empirically for a given design technology.

The calculating step may be performed for each of multiple said time steps to provide the time dependence of the performance metric.

The method preferably further comprises repeating the simulating and calculating steps for different runtime situations.

Runtime situations may include (or at least imply) operating conditions of the circuit such as a workload, in particular input voltages applied during a given time step of the simulation. These values may be derived empirically so as to present a range of feasible workload conditions to the simulation. When the method is applied to simulation of a digital circuit, the input voltages for a series of time steps can be represented as a bit sequence. The method of the invention can also be applied to "workload tuning", allowing strategies to be tested for mitigating the effects of workload-related degradation of performance metrics.

Preferably also, the comparing step generates a different randomly-generated value for high and low values of the obtained voltage.

The method may include a further step, following those already mentioned, of analysing the performance metrics calculated for each circuit instance to generate a statistical distribution of the performance metric.

In the comparing step, preferably, an equation is employed which describes the capture and emission probabilities at each site for at least a given voltage value and duration of time step. Optionally, temperature dependence is further taken into account.

The method may further include providing an analytic description of the sites at an arbitrary time during operation of the circuit, allowing the simulating step to be performed starting from the arbitrary time for each circuit instance. The analytic description can initialize the simulation on the basis of a realistic stress applied to the circuit, and not just based on a periodic signal as done by RelXpert for example.

In the above method, the duration of the time steps is selectable to simulate short- or long-term variation of said performance metric.

Various kinds of device and device technologies may be investigated by means of the present invention. Whilst of particular application to p- and n-channel FETs (MOSFETs) - see below - any other kind of electronic device for which the characteristics are influenced by capture and emission events covering both fabrication time or during operation, may be considered. Every effect in such a device that can be modelled by capture and emission events can be simulated by the present invention. This includes bipolar junction transistors (BJTs), junction field effect transistors (JFETs), high electron mobility transistors (HEMTs), insulated-gate bipolar transistors (IGBTs) and so on. The present invention is not restricted to transistors as devices; for example various kinds of diode known in the art may also be considered.

Various time-varying phenomena may be investigated by the method according to the present invention; for example, the capture and emission events modelled by a method of the invention may be responsible for bias-temperature instability (BTI), random telegraph noise (RTN), and/or hot carrier injection (HCI). Of these phenomena, at least BTI is of particular relevance to FETs. Hence, the present invention can be applied to simulation of circuits constructed from FETs, as well as to other types of circuit. In the case of applying the method to a circuit of FETs, each "device" referred to above may be an individual FET. One or more time-varying phenomena may be investigated at once (i.e. by the same simulation).

As already mentioned, one particular phenomenon of interest in FET-based circuits is negative BTI (NBTI), which affects p-channel FETS (pFETs). To investigate the effect of NBTI of performance metrics of a circuit, the method of the invention may be applied to circuits of pFETs and nFETs by performing the assigning, simulating and calculating steps to each pFET in the circuit. Optionally, positive BTI (PBTI) of the nFETs may also be considered.

Some large-scale circuits are made up of many repetitions of the same unit circuit or cell. In this case, the method of the invention may be applied to such a unit circuit in order to yield information about the expected performance of the large-scale circuit.

More than one characteristic may be investigated at once. In this case it is possible to perform the assigning and simulating steps for each characteristic being studied. Threshold voltage is one important device characteristic. Others include (in the case of FETs), transconductance, drain current and sub-threshold slope ($\log I_{ds}$ against $V_{gs}$ for $V_{gs} < V_{th}$).

The simulating step of the method is preferably implemented with use of a technology-dependent device model modified by code written in a hardware description language, such as Verilog-A.

In such an implementation, preferably, the generating step generates each instance of the circuit as a netlist which is modified to reflect the number and properties of capture and emission sites of each device. The resulting set of netlists may be presented as inputs to a solver (for example, HSPICE) along with the modified device model.

According to a second aspect of the present invention, there is provided code, which when executed by a circuit simulator, performs any method as defined above.

Such code may be stored on a computer-readable medium. The medium may be a non-transitory medium.

An embodiment of the present invention is applied to BTI as already mentioned. It is believed that a large portion of BTI degradation and recovery is due to charging and discharging of gate oxide defects. Because only a handful of defects will be present in future nm sized devices, tracking the occupancy of individual defects becomes a feasible approach to circuit reliability assessment. Aging and degradation is thus simulated following the occupation of each defect in time, while considering the impact of the individual charged defects on the respective FET's operation. An embodiment of the present invention incorporates the stochastic nature of these defects and their individual impact on FET operation into existing industry-standard circuit simulation tools, in order to provide a realistic model of time-dependent variability under actual circuit workloads.

Thus, embodiments of the present invention can provide a combined deterministic-stochastic view of reliability related time-varying phenomena, such as Bias Temperature Instability (BTI) or Random Telegraph Noise (RTN). The deterministic quality refers to the model's workload dependency which is based on individual defects, which are activated or not, based on a realistic input waveform for each device (i.e. not just on an average duty cycle). The stochastic component mirrors the probabilistic nature of individual defect activity, and can be decoupled from the workload dependency by a novel technique, described below, of random number generation. In this way it becomes possible to observe and analyze true workload dependent behaviour. Moreover, that analysis can be the basis of mitigation approaches based on workload tuning, individual device sizing, or other approaches.

Thus, the method of the invention can be extended to include fabrication of the electronic circuit of which the operation was simulated, taking into account results of the simulation for example by individual device sizing.

Alternatively, or in addition, the method of the invention can be extended to include manufacture of the circuit followed by operating the circuit taking into account results of the simulation, for example by workload tuning.

The subject matter regarded as the invention is particularly pointed out and distinctively claimed in the claim section concluding this document. The invention, both as to organization and method of operation, together with features and advantages thereof, may best be understood by reference to the following detailed description when read with the accompanying drawings.

For purposes of summarizing the invention and the advantages achieved over the prior art, certain advantages of the invention have been described herein above. Of course, it is to be understood that not necessarily all such advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other advantages as may be taught or suggested herein.

Brief Description of the Drawings

Reference is made, by way of example only, to the accompanying drawings in which:

Figure 1a illustrates selected properties of defects occurring in each of three instances of a FET;

Figure 1b shows the effect over time (Bias Temperature Instability or BTI) of the defects in Figure 1a upon the threshold voltage of the FET;

Figure 2 shows a simulation system to which the present invention may be applied;

Figure 3 is a graphical representation of an analytical description of trap occupancy, employed in an embodiment of the present invention;

Figure 4 shows histograms of trap occupation probabilities, showing the correspondence between the analytical description and results of simulation of occupancy transitions;

Figure 5 is a flowchart of a random number generation process for the purpose of simulating occupancy transitions in an embodiment of the present invention;

Figure 6 shows the effect of using the process of Figure 5 to decouple workload dependency from random number generation;

Figure 7 shows an example of applying a simulation method embodying the invention an inverter;

Figure 8a shows an SRAM cell and Figure 8b shows a bit slice of a SRAM;

Figure 9 shows the results of applying a method of the present invention to the bit slice of Figure 8;

Figure 10 shows a simulation system embodying the present invention in which the role of runtime situations is emphasised;

Figure 11 shows results of performing a simulation on an inverter as in Fig.7 with different runtime situations; and

Figures 12a and 12b show results of performing simulations on the bit slice of Fig.8 with and without taking into account BTI.

Detailed Description

As already mentioned in the introduction, various time-varying phenomena affect the performance of highly-scaled electronic devices due to events at the atomic level. Typically such phenomena involve individual sites or "defects" in the device which undergo capture and emission events of charge carriers. It is possible to monitor the occupancy of individual defects. An important feature of the invention is the realisation that if this atomistic model is applied to any circuit, it is possible to identify the effect of the defect activity on the operation parameters of the circuit, like the circuit's delay or leakage energy. In this way, the circuit's parametric reliability can be studied.

An embodiment of the present invention will now be described with regard to NBTI in pFETs. However, it is to be understood that the present invention is in no way limited to studying NBTI, or to FET-based circuits.

The simulation begins by considering individual devices within a circuit. In the simplest case, the circuit may be largely or wholly constructed from devices of the same kind, such as FETs. Even if other device types are present, this does not prevent obtaining useful information by modelling the effects of time-varying phenomena on specific device types.

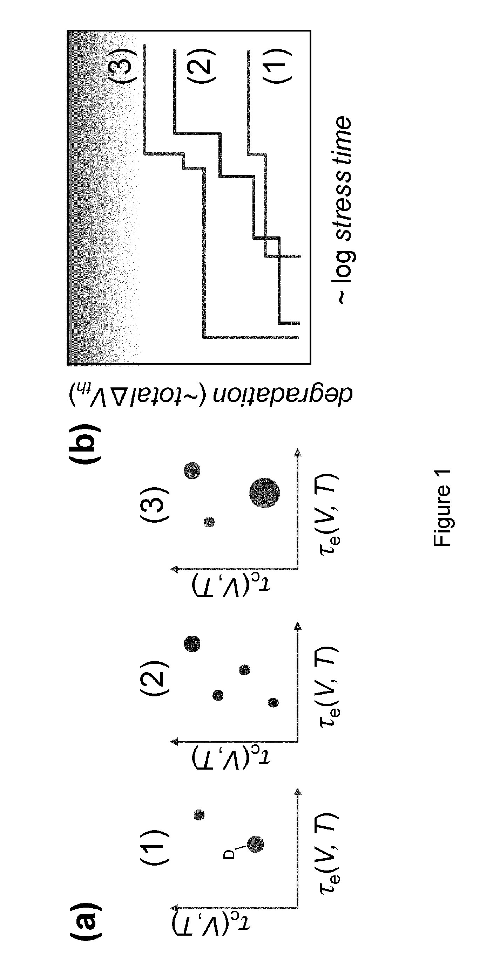

A time-varying phenomenon, in this case NBTI, is modelled in terms of capture and emission events of defects (also called "traps" or "sites" in this specification). The basis of the device model is schematically illustrated in Figure 1a. Each device is characterized by the number of defects, their capture and emission times $T_c$ and $T_e$, and their individual impact on the device when occupied by a charge carrier (the site is then said to be "charged"). The values for these parameters are selected from within ranges determined by experiments on real devices. Figure 1b shows the progressive degradation of threshold voltage $V_{th}$ in the three devices, considering only capture events and assuming a constant stress for simplicity. The x-axis represents stress time (log scale), corresponding to total operating time of a practical circuit, whilst the y-axis shows the amount of degradation in terms of the total change in $V_{th}$.

Figure 1b represents the cumulative effect of the threshold voltage shifts caused by each defect; in this simplified example there is no relaxation as constant stress is assumed. It can be seen that the precise pattern of degradation differs in each instance owing to the stochastic nature of the capture and emission events. For example, device (1) does not undergo any change in $V_{th}$ early in its life and its $V_{th}$ remains relatively stable throughout, whilst device (3) shows a large change in $V_{th}$ early in its lifetime and continues to exhibit a higher degree of degradation than the other devices throughout its lifetime. This illustrates the time-dependent variability in highly-scaled devices.

The defects are more formally characterised using the following "prescription":

for each FET instance with gate length LG and width WG:

    initial values:

        $V_{th0}$: from Gaussian($<V_{th0}>$, $\sigma$)

    oxide defects:

        for each defect i = 1 .. n from Poisson(N), where $N = L_G W_G N_{ot}$:

            initial occupancy state $P_{c0}$ (0 or 1): e.g. using Equation 4 below

            $\Delta V_{th,i}$ when occupied: from Exponential($\eta$), assuming $\eta \sim 1/L_G W_G$

        $T_{c,H}$, $T_{e,H}$, $T_{c,L}$, $T_{e,L}$:

            $\tau_{e,L}$ uniformly distributed on log scale

            capture and emission $\tau$'s weakly correlated

            L and H $\tau$'s connected via voltage dependence

Thus, in the above prescription for including initial and time-dependent variability in the FET model, each instance of a FET with gate dimensions $L_G \times W_G$ is initiated with a specific number of defect precursors n taken from a Poisson distribution obtained empirically with mean $N = L_G W_G N_{ot}$. Here, Not is the gate oxide defect precursor areal density; an example value for this is $12.5 \times 10^{10}$ per $cm^2$. Each defect can be independently initialized as empty (uncharged) or occupied (charged). For the purposes of the present description, only the impact of defects on the FET threshold voltage $V_{th}$ is assumed in the form of a voltage shift $\Delta V_{th}$, taken from an exponential distribution with the mean value $\eta$. The scaling of $\eta$ with device dimensions is possible in various ways; the most simple scaling is: $\eta \propto 1/L_G W_G$.

Furthermore, each defect is characterised by its capture and emission times $T_c$ and $T_e$, which as already mentioned are average or expectation values. Due to the inelastic nature of the charging mechanism, $T_c$ and $T_e$ are strongly voltage and temperature dependent. The voltage dependence of each time constant is simplified in the case of digital circuits to two values, at low (L) and high (H) gate biases. Hence each defect is described by 4 time constants: $T_{c,H}$, $T_{c,L}$, $T_{e,H}$, and $T_{e,L}$. The latter is assumed to be uniformly distributed on the log scale between $10^{-9}$ and $10^9$ s. $T_{c,H}$ and $T_{e,H}$ are taken to be weakly correlated with $T_{e,L}$, with $<T_{c,H}> \sim 0.01 <T_{e,L}>$ and $<T_{e,H}> \sim 100 <T_{e,L}>$. $T_{c,L}$ is assumed to be large. Values of T's for intermediate voltages are interpolated from the supplied L and H constants. The impact of temperature is neglected for present purposes.

The initial (time-zero) variability is captured by assuming a Gaussian distribution for the initial threshold voltage $V_{th0}$ of each FET. The parameters of this distribution are the mean$<Vth0>$ and the variance $\sigma^2$.

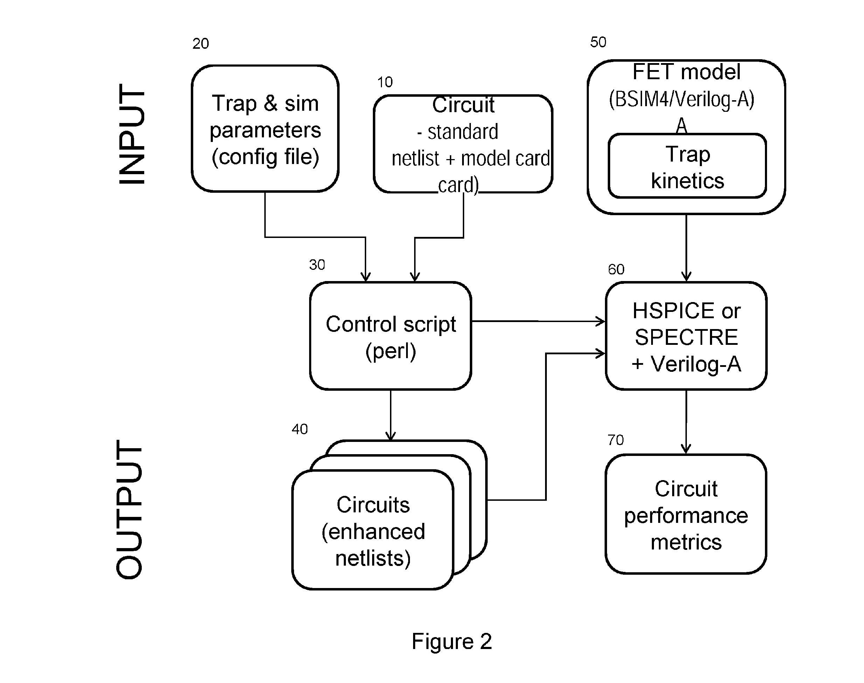

Figure 2 is a flowchart of a simulation framework based on industry-standard tools. The simulation framework accepts an arbitrary circuit 10 in the form of a standard netlist, describing the numbers and connections of circuit elements, together with a model card such as PTM 32nm (32nm representing the feature size in the process technology to be used to fabricate the circuit). These elements could be individual devices (e.g. FETs) or could be simple circuits such as logic gates or inverters, in which case a model card is employed to detail the devices involved, including transistor types and technology. Further, a configuration file 20 is supplied to allow defects to be generated as shown in Figure 1 (a). Based on the configuration file 20, a control script 30 (incorporating the prescription set out above) generates multiple instances 40 of the circuit, each enhanced with unique random values of defect parameters for each FET. These instances are submitted to the a known electronic circuit simulator program 60 such as HSPICE or SPECTRE, also called a "solver".

A key feature in this simulation framework is the addition of an enhanced FET model 50 to simulate the impact of individual capture and emission defects (referred to as "traps" in Figure 2) on the FET's behaviour. As a basis, there may be used the standard BSIM4 FET model, implemented in Verilog-A; this gives a detailed representation of an individual transistor, providing voltage and current equations to the solver. It should be noted that a non-Verilog-A implementation of BSIM4 is available, but the Verilog-A form is chosen for ease of modification. Parameters for the FET model 50 are provided from the model card mentioned in item 10. The standard model is enhanced, in this embodiment, using additional Verilog-A code to simulate the defects, specifically, to follow the occupancy of each defect in every degrading FET. Equations for this purpose are given below. Any sub-circuit is expanded down to device level. In this way, each device is annotated with NBTI parameters alongside the parameters provided by the standard model card. The theoretical basis for this code is discussed below.

The solver 60 is invoked by the control script 30, and receives as inputs the circuit instances 40 and the enhanced FET model 50. The solver performs the simulation from a desired start time $t_s$ during the lifetime of the circuit (see below). Although not shown in Fig.2 for simplicity, simulated workloads can be a further input to the solver, either by inclusion in the netlist in 10 or as part of the configuration file 20. That is, multiple instances of the circuit may be simulated with multiple "runtime situations" as explained later, which in their simplest form are sequences of input voltages applied to the circuit. Finally, the resulting circuit parameters from all instances are statistically analyzed to yield one or more performance metrics 70.

In known manner, the solver 60 simulates the operation of the circuit by calculating (i.e., solving differential equations for) signal levels and other circuit parameters at each of a succession of time steps. As explained in more detail below, the solver takes into account the defect behaviour in the following way. For every time step, and every defect, a generated random number is compared to the capture or emission probability that corresponds to the current gate voltage and defect state (occupied or not). If the random number is found to be smaller than the probability, the respective capture or emission process is deemed to occur in that time step and in that defect. When a defect is occupied (i.e. a carrier is captured in the trap), the respective $\Delta V_{th}$ value is added to the runtime threshold voltage ($V_{th}$) value of the device. The process is repeated for every defect assumed for the device, for every device in a given circuit instance, and for every instance of the circuit.

The distributions of the defect time constants are taken from experiments, and the possible range of time constants is sufficient to account for a very wide variety of defect behaviours. By selecting a sufficiently short time step for the simulation, it is possible to observe a fast succession of capture and emission events for a single defect (corresponding to RTN). It is also possible to observe near-permanent behaviours, with larger time constants (corresponding to BTI); In this case a larger time step may be employed. Selecting different start times $t_s$ allows different stages during the lifetime of the device to be investigated.

The theoretical basis for the above simulation of defect behaviour will now be explained.

To a good approximation, the capture and emission of charge can be described by first-order kinetics. The probability of a defect capturing charge Pc is then described by the differential equation:

$$\frac{dP_c}{dt} = \frac{1-P_c}{\tau_c} - \frac{P_c}{\tau_e} \qquad (1)$$

The two terms on the right-hand side of Equation1 correspond respectively to capture and emission probabilities. The general solution of this equation is:

$$P_c = \frac{\tau}{\tau_c} + \left(P_{c0} - \frac{\tau}{\tau_c}\right) \exp\left(-\frac{t}{\tau}\right). \qquad (2)$$

where $T^{-1} = T_c^{-1} + T_e^{-1}$ and t stands for the time elapsed since the trap was occupied with the probability $P_{c0}$. Each defect's occupancy transitions are determined during the circuit simulation using

$$P_{p,V} = \frac{\tau_V}{\tau_{p,V}}\left[1 - \exp\left(-\frac{\Delta t}{\tau_V}\right)\right]. \qquad (3)$$

Here, $P_{p,V}$ is the probability of an occupancy transition occurring during a simulation time step $\Delta t$; p stands for process (capture or emission), V is the gate voltage (H or L), and $T_V^{-1} = T_{c,V}^{-1} + T_{e,V}^{-1}$. Equation 3 is implemented in Verilog-A as part of the enhanced model 50 shown in Fig.2, and used to update the occupancy (i.e., instantiate it with 0 or 1 based on a randomly generated number) of every trap at every simulation step. The process p is selected depending on the state $P_{c0}$ (0 or 1) of the defect at the beginning of the simulation step. In this way, the simulation framework of Figure 2 directly and naturally simulates the impact of individual charge trapping events (such as RTN) on FETs, and hence on the circuit operation.

Generally, the capture time decreases (the probability of capture increases) and the emission time increases with increasing voltage (that is, increasingly negative $V_{gs}$ in the case of a pFET). Therefore, at high V the capture events dominate whilst for low V the emission events dominate.

If equation 3 has to be carried out at every time step for each defect of each device of each circuit instance, this will involve a very large number of calculations particularly for a large-scale circuit. It is therefore computationally unfeasible to simulate the circuit after long operation (e.g. 1 year), making it difficult to investigate "slow" defects. To overcome this, a preferred embodiment of the present invention employs an experimentally verified analytical description of trap occupancy after stressing with a square periodic signal with frequency f, a workload-equivalent duty cycle (or duty "factor") DF, and duration $t_s$, as follows:

$$P_c = \frac{B}{A}\left[1 - \exp\left(-At_s\right)\right]. \qquad (4)$$

The purpose of this analytical description is to initialize the simulation at some point $t_s$ during the circuit lifetime, allowing setting of any arbitrary time point during at which to begin the simulation in accordance with Equation 3 above. Thus $t_s$ represents a time during which the circuit is stressed or "aged" prior to the simulation. Use of Equation 4 allows a more realistic "ageing" of the circuit, compared with the simple assumption of a constant or simple periodic stress. In this way, the simulation can be run over one or more representative time periods each of perhaps only a few hundred time steps, making it computationally feasible to investigate longer circuit lifetimes and/or larger-scale circuits.

Here A and B are in general functions of f, DF, $t_s$, and arbitrary $T_{c,H}$, $T_{c,L}$, $T_{e,H}$, and $T_{e,L}$. Equation 4 is valid for both "slow" (i.e., T's >> 1/f) and "fast" (i.e., T's << 1/f) traps.

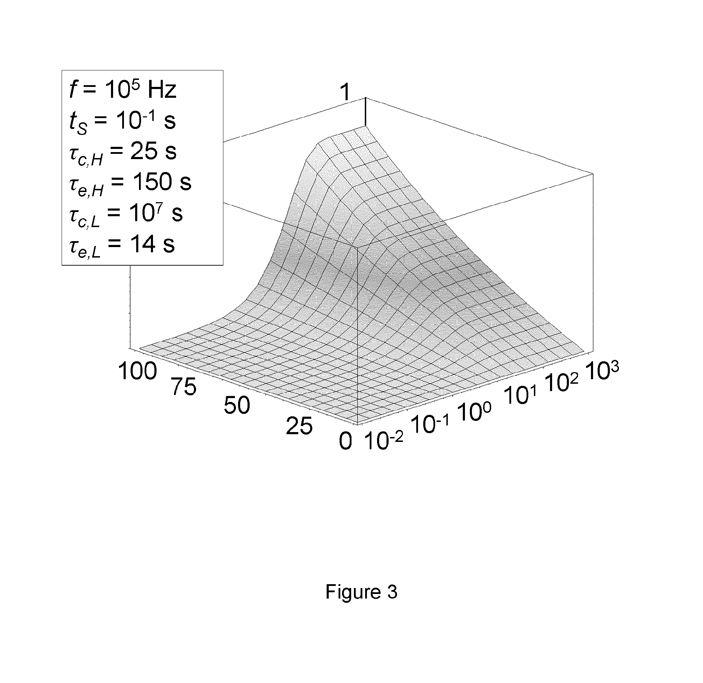

Figure 3 graphically shows the behaviour of Equation 4 for a particular set of trap parameters, start time $t_s$, a periodic AC stress with constant duty factor DF, and operating frequency f. As can be seen, under the parameter values assumed, the occupation probability tends towards 1 as the start time and duty factor increase, in accordance with observed BTI behaviour. To initialize the defect occupancies after an operation time $t_s$, instantiated Pc (i.e., 0 or 1 decided with the probability Pc) is input into the circuit simulation as the initial state of each trap.

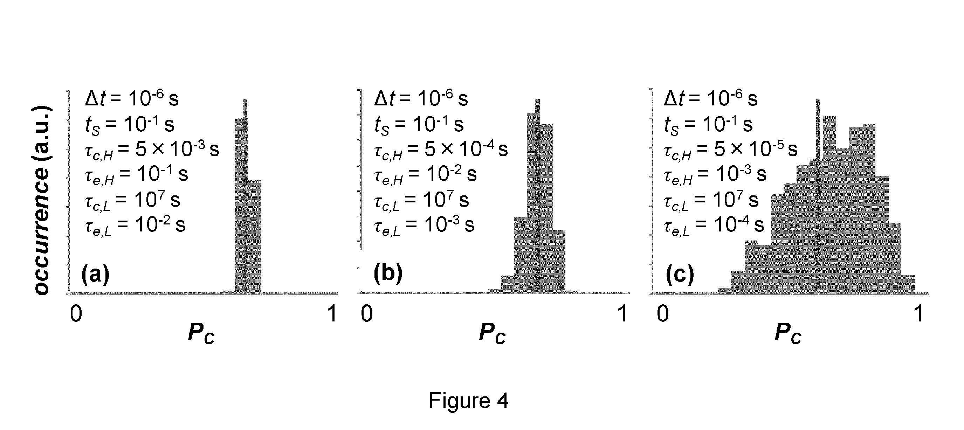

Figure 4 shows a comparison between results obtained from the "full" simulation in accordance with Equation 3 (light-shaded bars), and the analytical description of Equation 4 (dark-shaded bars). For the light-shaded bars, the occupation probabilities Pc are calculated using Equation 3 by following 5000 irregular random signals with mean f=25kHz and mean DF=50%. Figure 3 assumed that a constant DF is applied; however Figure 4 confirms that for the more realistic case of irregular workloads, Equation 4 can still be used to initialize the simulation at time $t_s$ if a workload-equivalent DF (in other words, a duty factor obtained from experiments on the type of circuit of interest) is used.

Figure 4a shows that Equation 4 is a good approximation for "slow" defects, namely defects having long capture and emission time constants. Such defects become dominant at longer operating times. Equation 4 is therefore clearly valid for integrating the impact of defects with larger time constants into the circuit simulation. Equation 4 is obviously not strictly correct for "fast" defects in case of irregular workloads, as depicted in Figs. 4b and 4c; however, the degree of approximation involved (that is, the difference between the single dark bar and the widely-distributed light bars) may be essentially irrelevant as the defect occupancy will change rapidly during simulation. That is, once the simulation in accordance with Equation 3 begins, after a few time steps the defect occupancies will be essentially randomized such that the initial states are no longer important. For very fast defects Equation 4 can still be used, however, the occupancy of the defects will change rapidly during the simulation.

As already mentioned, the simulation in accordance with Equation 3 requires a random number per iteration, which is compared to the $V_{gs}$-dependent probability for a capture or emission event (depending on the occupancy of the defect). The workload for each device corresponds to the imposed $V_{gs}$ at any given time. In a preferred embodiment, by binding the random number generation to the imposed $V_{gs}$, it is possible to decouple the workload dependency from the model's stochastic component.

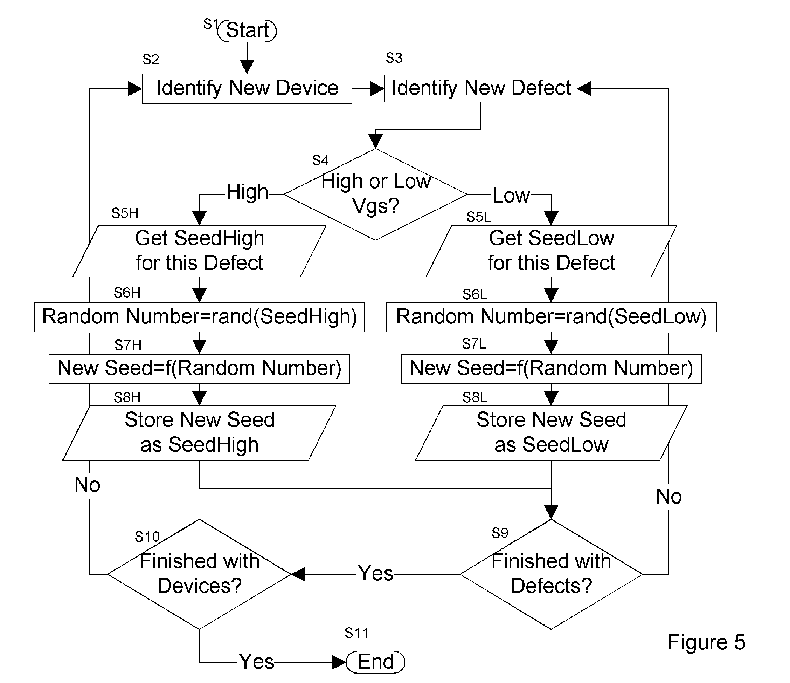

Figure 5 shows a flowchart of a random number generation process suitable for this purpose, again assuming a digital circuit for which the input voltage is either L or H. The process starts at step S1. At S2, a new device is identified. The first defect in this device then becomes the subject of the process (S3). It is checked whether the workload applied in the current time step applies a high or low voltage to the device (S4). In the case of an FET, the gate-source voltage $V_{gs}$ is the appropriate measure. In the case of a high Vgs, a step S5H obtains the current seed value SeedHigh for the random number generation. A random value is then generated from this seed (S6H). A new seed value is then obtained, based on the random value just generated (S7H). The new seed value is obtained in a deterministic manner (for example, using an algebraic function f as shown at S7H, or using a look-up table) and this is stored as the seed for the next time step (S8H). The case of a low $V_{gs}$ is the same, except that the respective process is performed by parallel steps S5L to S8L with a separate seed value SeedLow.

In either case, it is then checked (S9) whether there are further defects in the current device. If so then the process returns to step S3. If not, it is checked whether there are further devices to be considered in the current time step (S10) and if so, the process returns to step S2; if not the process terminates (proceeds to the next time step) at S11.

The process of Figure 5 ensures that the number and behaviour of the defects is workload dependent. Furthermore, the annotation of the netlist with NBTI parameters needs to be performed just once. In this way, it is ensured that the number and behaviour of the defects is the same for every imposed workload. With these modifications, the stochastic component is suppressed in favour of the workload dependency.

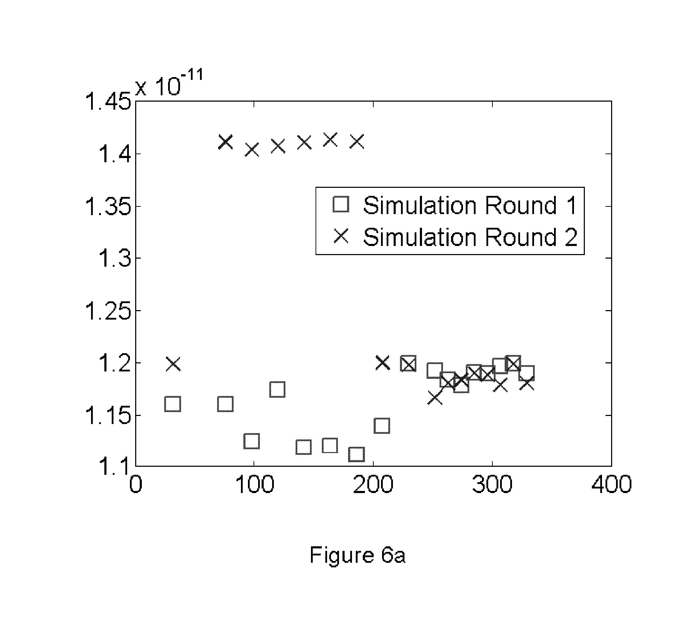

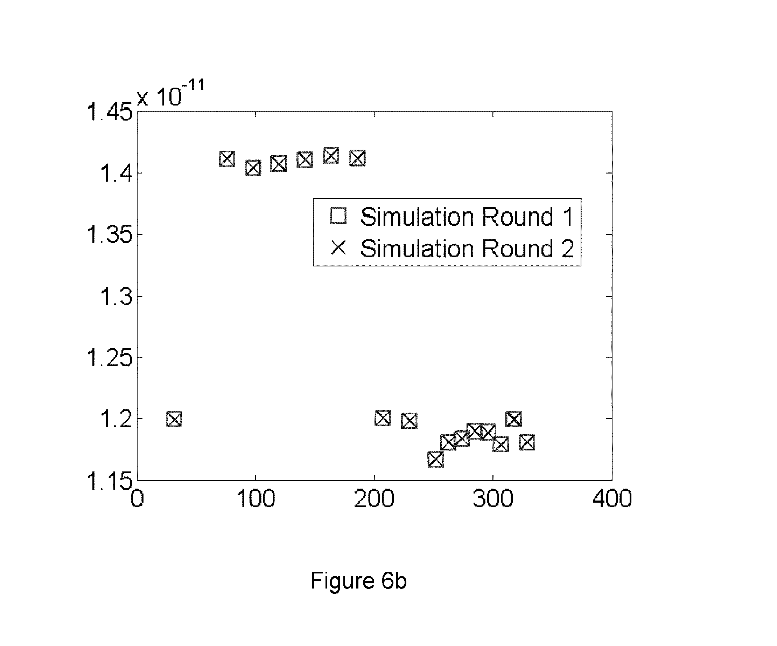

Figure 6 shows the effect of applying the decoupled random number generation process according to Figure 5, based on simulation results for a SRAM bit slice described below, performed twice with the same workload.

The x-axis shows simulation time (corresponding to operating time of the circuit) and the y-axis represents the performance metric, which in this example is the observed delay for an SRAM read operation. The individual data points therefore indicate delay measurements of individual reads. Figure 6b shows that the process according to Figure 5 yields the same output in both runs, since the workload is the same for both. By contrast, Figure 6a shows the effect of running the simulations ignoring Vgs when generating the random number values (in other words without the two parallel branches in Figure 5). Here, the stochastic component is deeply rooted in the simulations, so the output is different and the results difficult to interpret.

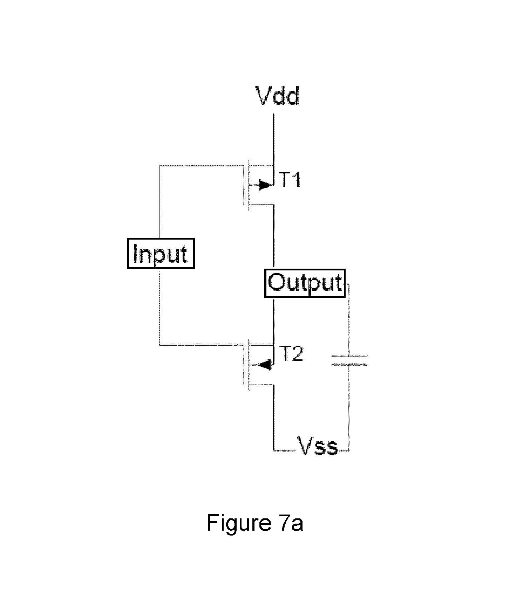

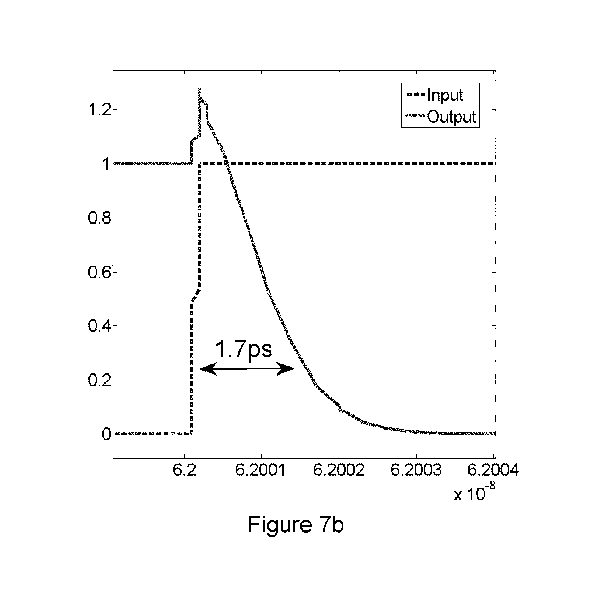

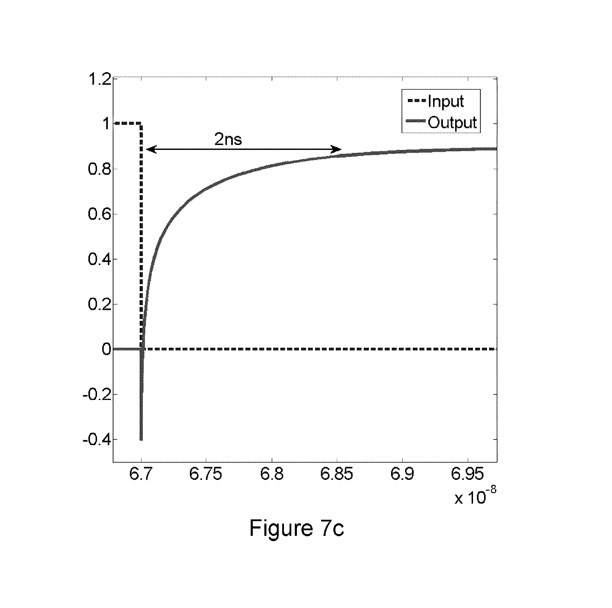

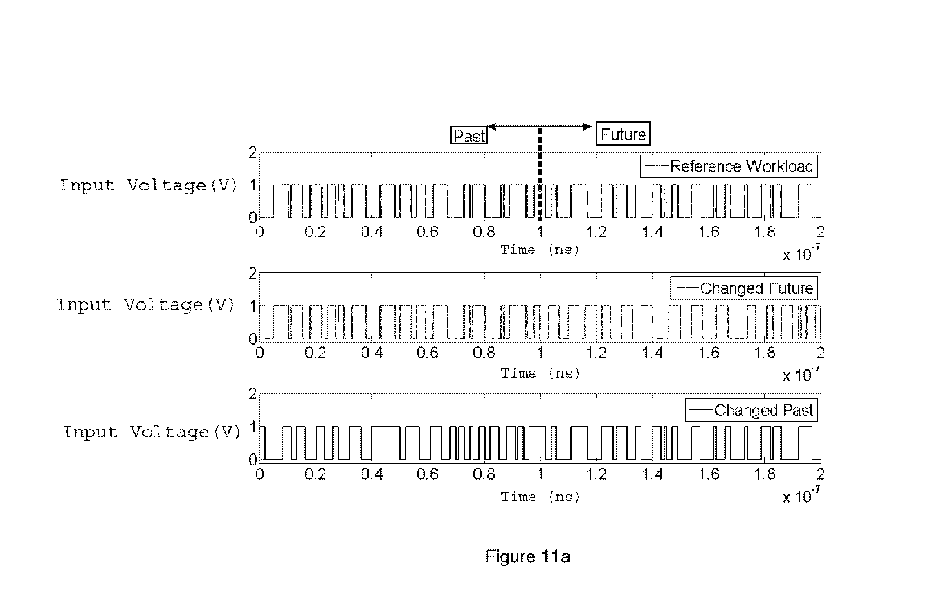

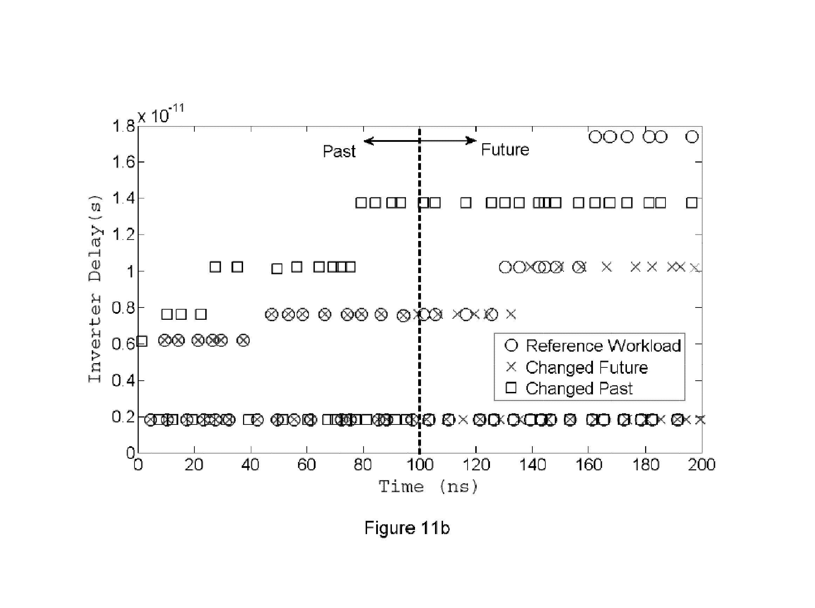

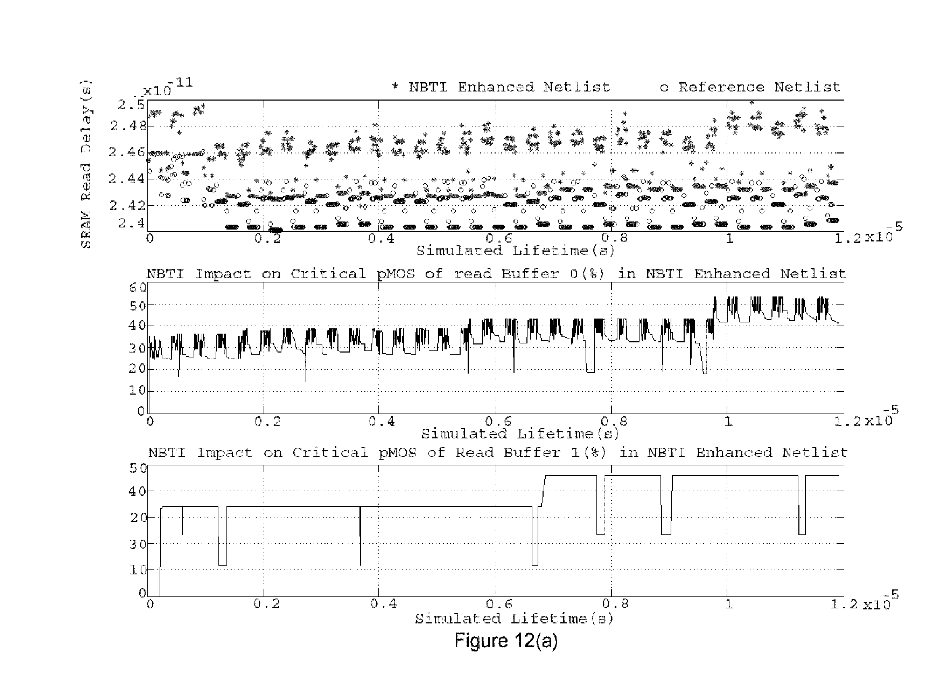

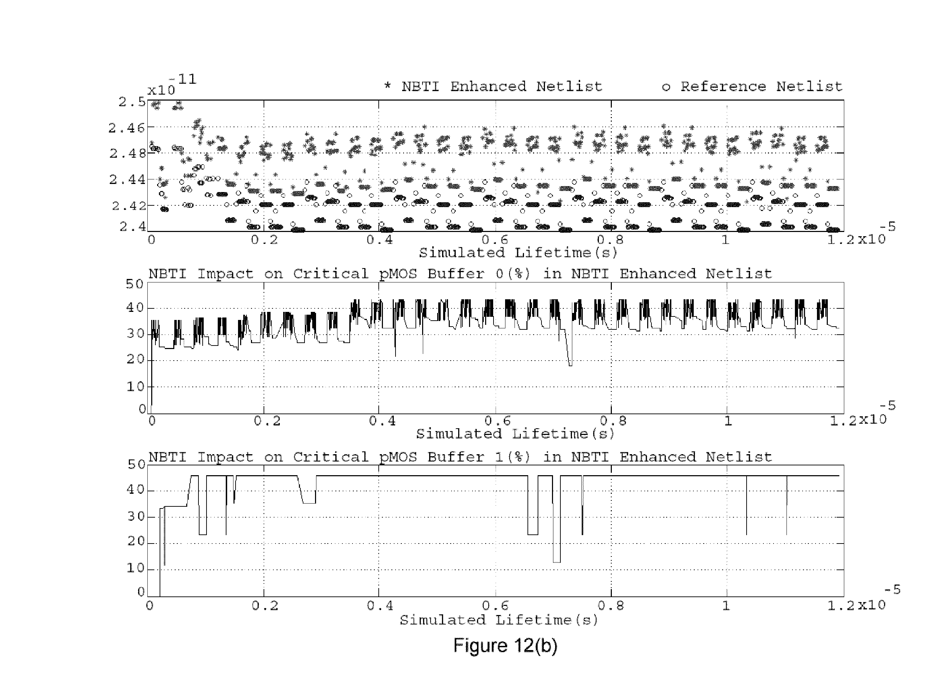

To illustrate application of the embodiment to actual circuits, two case studies will now be described by way of example: a simple CMOS inverter, and a bit slice of a static random access memory (SRAM). Figures 7 to 9 show the circuits involved and the performance metric to be examined in each case, and Figures 11 and 12 show results of simulations.

The CMOS inverter as illustrated in Figure 7(a) forms the basis of many larger circuits. The publicly available PTM 32 nm Metal Gate /High-k / Strained-Si technology model card is used in item 10 of Figure 2. For the purposes of the present example, only the inverter pFET T1 is assumed to be degrading.

Figures 7b and 7c show the performance metric chosen to investigate, namely the inverter delay which is the time taken, after switching of the input signal, for the output voltage to reach 90% of nominal "0" or "1" level. The x-axis shows time (in this case, the brief instant needed to capture a change in state) and the y-axis is the input or output voltage. Since the pull-up branch is affected by NBTI, we should expect larger delays for delay measurements during a "1 "-"0" transition at the input.

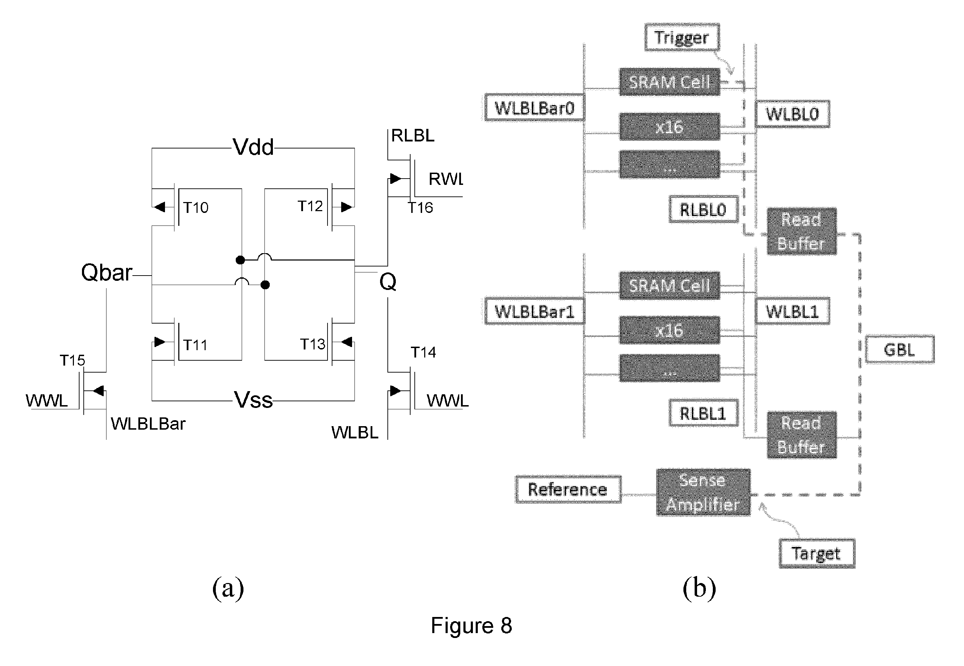

Figure 8b is a schematic block diagram of an SRAM bit slice of 32 bits, divided in two groups of SRAM cells, the circuit diagram of a single such cell being shown in Figure 8a.

Referring to Figure 8a, the SRAM cell is formed by two cross-coupled inverters formed by FETs T10, T11 and T12, T13. The two complementary nodes Q and Qbar are connected to voltage sources through access transistors T14 and T15 respectively. Writing is performed by applying appropriate voltage values to the access transistors via local write bit lines WLBL and WLBLBar, and reading is effected in this design through transistor T16 connected to a separate local read bit line RLBL.

Referring to Figure 8b, for the reading operation, the two groups of SRAM cells have single local read bit lines (RLBLO and RLBL1) which are connected to a global bit line (GBL) through read buffers. The GBL is then connected to a sense amplifier (SA) and compared to a reference voltage. The dashed line in Figure 8b indicates the critical path across which delay is measured.

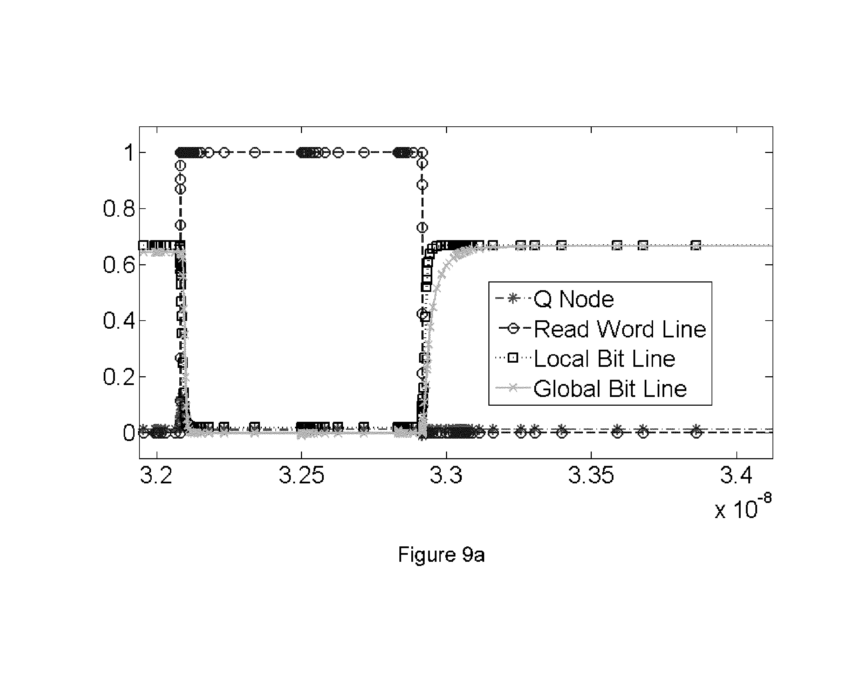

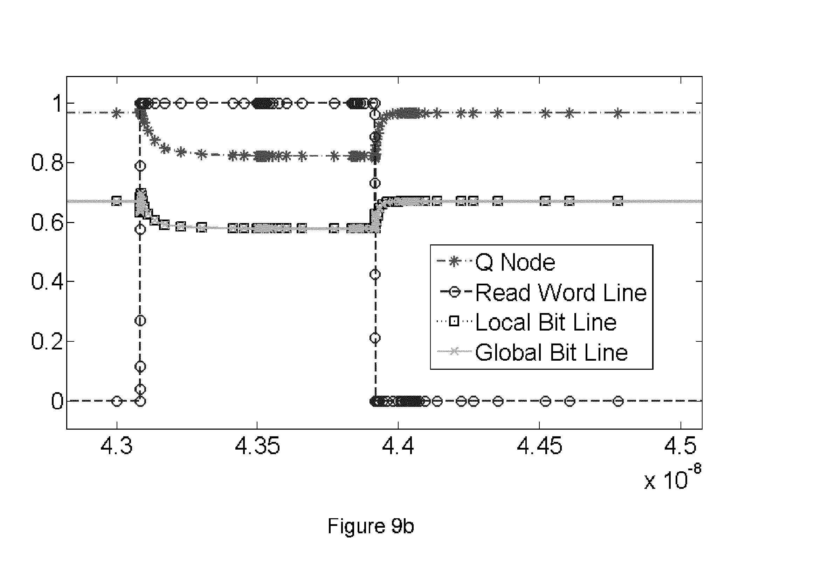

Figure 9 shows switching of states in the SRAM, corresponding to Figures 7b and 7c. Figure 9a shows reading of a logic "0" value stored in a cell and Figure 9b, reading of a logic "1". The RLBLs and the GBL are always pre-charged to a specific voltage and are discharged to Vss, when a stored "0" is read. The performance metric in this case is the delay of the read operation, defined as the time from the activation of a word line (reaching 90% of logic "1") up to the point where the voltage difference, at the inputs of the SA, is enough for the latter to sense and stabilize to a specific state as shown in Figure 9. In this example, the morphology of this SRAM allows the global read bit line to deviate from the precharge voltage, only when reading a "0" value, as shown in Figure 9a. In the case of reading a "1", the global read bit line remains at its precharge voltage, as shown in Figure 9b. Thus, it is only needed to measure the delay when a "0" is read.

Turning now to details of the simulation, in the inverter case, a specific sequence of bits applied at the input of the inverter is used as the runtime situation. The frequency of this sequence is 1GHz.

In the case of the SRAM bit slice, each of the cells can be in one of the Read, Write or Retain operation modes. If a cell is not being read or written, it retains its value. All operation modes have the same duration. As long as the consistency of the cells' internal state is maintained (e.g. one cannot read from a cell that has not been previously written), an arbitrary sequence of operation modes can exist, with a frequency of 2GHz. The SRAM activity can be given an algorithmic description by the following lines of pseudo-code:

```
<Loop 1> { /* <Loop 1> iterations are */
                                  /* user defined */
  for (i=0; i<=31; i++) { /* Write all cells first */
    write (cell[i]);
    i++;
  }
  for (i=0; i<=31; i++) { /* Read cell-by-cell */
    read(cell[i]);
    for (j=1; j<=10; j++) { /* 10xTs Global Retaining */
      nop l* between reads */
    }
    i++;
  }
}
```

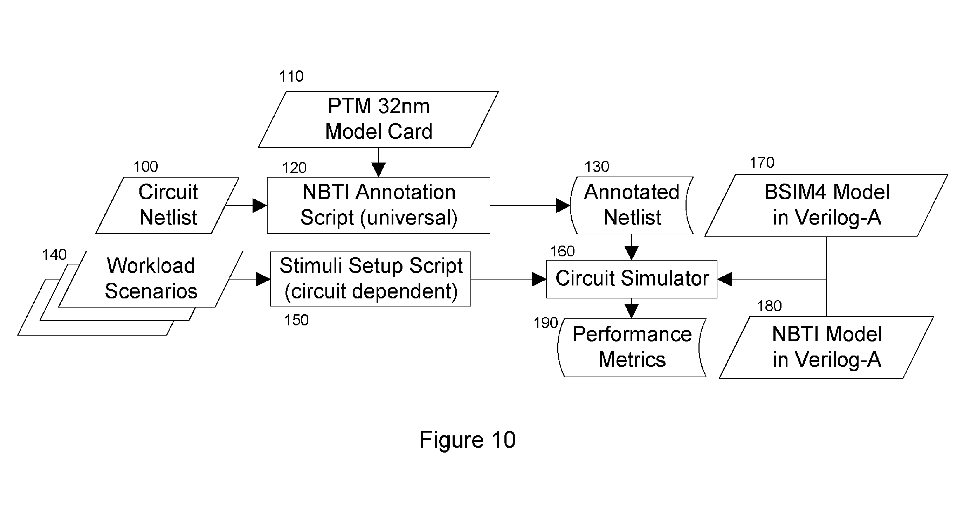

Figure 10 shows a simulation framework, similar to that of Fig. 2, used for the case studies. The main difference from Figure 2 is the emphasis placed on the different runtime situations employed in the simulation. The runtime situations are set up and supplied to the simulator separately, as the device properties remain the same.

Thus, Netlist 100 and Model Card 110 together correspond to Circuit 10 in Fig.2; 120 is an NBTI Annotation Script corresponding to the Control script 30 of Fig.2 for a single runtime situation, producing an enhanced netlist corresponding to 40 in Fig. 2. As in Fig. 2, multiple instances of the enhanced netlist may be provided. Meanwhile, the runtime situations 140 are applied to a Stimuli Setup Script 150 so as to provide the circuit simulator with the respective input patterns for each scenario. In the case of the SRAM bit slice, the runtime situations also include the initial values written in the memory cells. The BSIM4 Model 170 and NBTI Model 180 together correspond to the enhanced FET Model 50 in Fig. 2. The circuit simulator 160 is a known solver program such as HSPICE or SPECTRE, like 60 in Fig. 2; and the performance metrics 190 are the simulation results (or more correctly, the results of analysis thereof) as in Fig. 2.

Figure 11 illustrates results from simulation of the inverter of Figure 7a. Figure 11a shows three different runtime situations, and Figure 11b the resultant inverter delay times in each scenario for different instances of the circuit. The upper trace in Figure 11a represents a Reference Workload for which the simulation results are shown by the open circles "o" in Figure 11 b.

As a simple way to generate different runtime situations, based on a bit sequence of 200ns (Reference Workload), either the first ("Past") or the last ("Future") 100ns of the sequence are changed. The results demonstrate the model's detailed workload dependency which is not averaged out by a pure stochastically based model for the devices.

Referring to the middle trace in Figure 11a, the simulation output of the Changed "Future", shown by the "*" points in Figure 11b , is identical to the Reference Workload output up to the point that the bit sequence is changed. In contrast, if we only change the "Past", as shown in the lower trace of Figure 11a, the simulation output (see the "+" points in Figure 11 b) is entirely different. Note that the inverter delay changes by more than 10%, the usually accepted criterion for an acceptable variation.

What is demonstrated here is that the atomistic BTI model has a deterministic workload memory. The observed NBTI effect at any time strongly depends on the specific workload that has preceded the current operation state. This can also be analyzed on a cycle-by-cycle deterministic basis, which is a difference over existing circuit-level models.

Figures 12a and 12b illustrate results for the simulation of the SRAM bit slice of Fig. 8 with different workloads. These assume no initial stress (ageing) and that all defects are unoccupied initially.

Two entirely different workloads are simulated in Fig.12a and 12b respectively. Each workload is applied to the NBTI-enhanced netlist (points marked with "*") and to a reference netlist without any oxide defects (points marked by open circles). The SRAM read delay is measured in each case. As can be seen from the first (upper) graph in each of Figures 12a and 12b, the delay fluctuations of the NBTI case are much more rapid than the fluctuations of the reference. When NBTI is accounted for, the average delay differs significantly between the two workloads and so does the transient view of the delay jitter. When no oxide defects are considered, the average delay between runtime situations is negligible and the delay jitter is concentrated in a small, nearly shared, interval.

Referring now to the second and third graph in each of Figures 12a and 12b, these show the NBTI Impact (as defined below) on a critical transistor of each of the two read buffers of the netlist. Here, the "critical" transistor is one having most influence on the SRAM read delay time.

For the definition of the NBTI impact on the critical pMOS, it is necessary to obtain the $\Delta V_{th}[i]$ values, for all the device's defects (known and created during the netlist annotation). We define as $0$, the set of defects that are occupied during a specific time instance. We also define as $T$, the set of all defects belonging to a specific device. The definition of NBTI impact is then as follows:

$$\text{NBTI Impact} = \frac{\sum_{i \in 0} \Delta V_{th}[i]}{\sum_{i \in T} \Delta V_{th}[i]} \times 100\%$$

It will be apparent that this metric can take only distinct values (steps in the second and third graph), depending on the NBTI parameters that have been assigned to the device at pre-processing.

Since the only arbitrary parameter is the workload that is applied, it can be seen that the workload dependency at device level (NBTI Impact of critical transistors), propagates to the measured delay. When the workload is changed, the delay "footprint" is different, since the NBTI Impact "footprint" is different for critical transistors.

Thus, failing to account for oxide defects significantly underestimates the variations in delay likely to be experienced in practical circuits.

These results demonstrate that the method of the invention gives a different view of the runtime performance of any simulated circuit. By monitoring separately every defect of every simulated device, we can see the workload dependent nature of the model, propagating to the delay of the aged circuit. If the workload is changed at runtime, the difference in the evolution of the circuit's delay becomes immediately evident. In the case of the SRAM bit slice (Figure 8), when NBTI is accounted for, the delay measurements are distributed in a much broader interval. There is also a distinct connection between the imposed workload and the average delay. As a result, the two test cases illustrate and substantiate the deterministic component of the model of the present invention, which is modelling individual trap behaviour based on the actual input stimuli sequence (and not just on an "average" duty cycle).

Various modifications are possible within the scope of the present invention.

In the above detailed description, NBTI of pFETs was considered, but the method of the invention can also take into account PBTI affecting nFETs. The present invention is also applicable to other kinds of time-varying phenomena so long as these have a basis in stochastic events at an atomistic level in a device, such as HCI and RTN (see above) occurring in various kinds of transistors and other electronic devices. In general, any kind of electronic device for which the characteristics are influenced by capture and emission events can be considered covering both fabrication time and later usage. Every effect in such a device that can be modelled by capture and emission of carriers can be simulated by means of the present invention.

In the above description it has been assumed that defects exist in the oxide layer of a FET. However, other types of defects, such as those at the $Si/SiO_2$ interface under the gate, or defects in the semiconductor substrate, are equally capable of being handled by the same or similar equations. Also, although it is implicit in the above discussion that a capture and emission event involves only a single charge-carrier at a time, it may be possible for defects to trap multiple charge carriers.

The prescription for characterising defects, given near the start of the detailed description, may be modified or refined with experience. For example, the assumed relationship $\eta \sim 1/L_GW_G$ may be replaced by an alternative expression.

Likewise, although threshold voltage was considered as the device characteristic affected by NBTI, this is not the only characteristic varied by NBTI or other time-varying phenomena. For example, transconductance is another transistor characteristic which is liable to degrade over the lifetime of an electronic device. The present invention may be applied to simulate the effects of capture and emission events on one or more such characteristics simultaneously. It is conceivable that some device characteristics could actually improve due to capture and emission events; "degradation" is thus to be interpreted broadly as meaning any deviation from the device characteristics as-fabricated.

In the simulation method described above, the initial threshold voltage of each device was assigned within a distribution obtained experimentally, reflecting variations in the devices as-fabricated. Several other device parameters will also vary between devices, such as dopant concentrations, feature sizes, linearity (roughness) and so on. It is possible to factor in such variations, for example as part of the control script used to generate circuit instances, where they may affect the device characteristic(s) being studied.

One of the above case studies is a bit slice of a SRAM. This illustrates a general principle for use in applying the method of the invention to large-scale circuits: most such circuits include many repetitions of the same unit circuit or cell, and useful information about performance of the large-scale circuit may be obtained by considering only one (or a small number) of such unit circuits, without having to simulate the entire circuit.

In the above examples, the runtime situation comprised the sequence of inputs applied to the circuit (and the initial values of memory cells in the SRAM case). In the simple example of an inverter, there is only one input and thus the runtime situation can take the form of a single bit sequence representing the H or L input voltage at every time step. However, a more complex circuit will have multiple inputs and/or circuit branches, such that the runtime situation may need to specify the input voltages applied to each device. It is likely that some devices in such a circuit will be stressed more than others. Depending on the circuit design, it may be apparent that only certain devices are critical to the performance metrics and/or circuit reliability, so that the simulation and the runtime situation can concentrate on these.

Meanwhile, the runtime situation may be conceptually broader than the applied voltages, encompassing, for example, a variation in temperature of the circuit as determined for example on the basis of experimental evidence. Since capture and emission time constants vary with temperature, the effects of temperature can be factored in by varying the time constants $T_{c,H}$, $T_{c,L}$, $T_{e,H}$, and $T_{e,L}$ in Equations 3 and 4.

The above examples were simplified in assuming a digital circuit so that the applied voltages essentially take one of only two values. However, the method of the invention can also be applied to analogue circuits, for example by defining capture and emission time constants for each of a plurality of voltage ranges and devising runtime situations employing the same ranges.

Reference above to a simulation time step $\Delta t$ means any time step capable of being accepted by the solver. It is possible to repeat the simulation for the same circuit instances and under the same assumptions but with a different time step, in order to focus on shorter- or longer-term behaviour.

In the above examples, the defects were assumed to be present in each device from the beginning of operation, at least as "defect precursors". However, this is not essential, and it would be possible to add in all or some of the defects during the course of the simulation. This may be particularly applicable to time-varying phenomena having a basis in sites which accumulate during normal operation rather than being inherent in the as-fabricated device.

An embodiment of the present invention can thus provide an atomistic approach to introducing time-dependent variability into a circuit simulator in a realistic manner. The approach is based on previously proven physics of stochastic properties of individual gate oxide defects and their impact on FET operation. The method of the invention is capable of following defects with widely distributed time scales (from fast to quasi-permanent), thus seamlessly integrating random telegraph noise (RTN) effects with bias temperature instability (BTI). The employment of existing industry-standard circuit simulator tools ensures correct combination of the deterministic workload-dependent component with the stochastic modelling aspect while simultaneously incorporating interactions among different devices. The atomistic property of the utilized model allows the detection of workload dependency in performance metrics such as the delay of a circuit.

Whilst the description above has referred mainly to NBTI, the method of the invention can be applied to PBTI as well as to other kinds of time-varying phenomena including HCI. Thus, in its broadest form, the present invention provides a simulation framework which is applicable to a wide range of phenomena, devices and circuits and especially useful for investigation of the reliability of ULSI circuits.

Various approaches are possible in response to the results yielded by the simulation. One approach is so-called "workload tuning", in which the pattern of voltages applied to a given device in the circuit is managed in such a way as to reduce the stress on the device. For example, in the case of a memory circuit, strategies for scattering data widely over a cell array may spread the distribution of read and write operations from being concentrated on particular cells. Depending on the semiconductor technology used to realise the circuit, another possible approach is "gate sizing", according to which devices especially prone to stress may be made physically larger than other devices to reduce BTI and/or HCI effects.

Industrial Applicability

It is generally accepted that systematic and statistical variability will have to be considered in the design of future ULSI circuits. Embodiments of the present invention can provide a simulation method based on a workload-dependent model which describes the as-fabricated device parameters in terms of their statistical distributions, and inserts the effects of time-varying phenomena during circuit operation into circuit simulators, contributing to reliability assessment of the future circuits.

Thus, the invention can be used to find correlations between the imposed workload and its observed impact on performance metrics, and thereby obtain a more realistic view of the parametric reliability of larger circuits. The present invention incorporates both the stochastic and the workload dependent nature of defects such as oxide traps. Hence, it is a suitable tool with which to explore parametric reliability in a realistic and detailed workload dependent way.

**Claims**

1.  A method of simulating operation of an electronic circuit including at least one electronic device, a performance metric of the circuit varying in dependence on time and a workload applied to the circuit in a known relationship to at least one characteristic of the device, the device characteristic dependent in turn on charge-carrier capture and emission events which occur at capture and emission sites of the device with probabilities dependent on a voltage applied to the device, the method comprising:generating at least one instance of the circuit, each randomised with respect to the number and properties of said capture and emission sites of each device; and

    for each circuit instance:

       assigning an initial value to the device characteristic and initial states to the capture and emission sites of each device;
       simulating, for each individual site of each device, and for each of a defined series of time steps, the effect of capture and emission events on the device characteristic by:

          obtaining, from a runtime situation for the circuit, a value of the voltage applied to the device in the time step;
          comparing a randomly-generated value with the probabilities of a capture or emission event for the obtained voltage value, to determine whether a capture or emission event occurs in the time step; and
          updating the value of said device characteristic if a capture or emission event is determined to occur at the site in the time step; and

       calculating the performance metric for the circuit instance after any said time step, using said known relationship and said characteristic value of each device.

2.  The method according to claim 1, wherein the generating step further randomly assigns an impact for a capture or emission event on the device characteristic within a range according to a probability distribution determined empirically for a given device technology, said impact being used in said updating step.

3.  The method according to claim 1 or 2, wherein the calculating step is performed for each of multiple said time steps to provide the time dependence of the performance metric.

4.  The method according to claim 1, 2 or 3, further comprising repeating the simulating and calculating steps for different said runtime situations.

5.  The method according to any preceding claim, wherein the comparing step generates a different randomly-generated value for high and low values of the obtained voltage.

6.  The method according to any preceding claim, further comprising a step of analysing the performance metrics calculated for each circuit instance to generate a statistical distribution of the performance metric.

7.  The method according to any preceding claim, wherein the comparing step employs an equation describing the capture and emission probabilities at each site for a given voltage value and duration of time step.

8. The method according to any preceding claim, further comprising the step of providing an analytic description of the sites at an arbitrary time during operation of the circuit, allowing the simulating step to be performed starting from the arbitrary time for each circuit instance.

9. The method according to any preceding claim, wherein a duration of the time steps is selectable to simulate short- or long-term variation of said performance metric.

10. The method according to any preceding claim, wherein the assigning and simulating steps are performed for more than one characteristic of each device.

11. The method according to any preceding claim wherein the device exhibits at least one time-varying phenomenon due to the charge-carrier capture and emission events, for example bias-temperature instability (BTI), random telegraph noise (RTN), or hot-carrier injection (HCI).

12. The method according to claim 11, wherein the time steps in the simulating step are set to a duration appropriate to simulate said time-varying phenomenon.

13. The method according to any preceding claim, wherein said simulating step is implemented with use of a technology-dependent device model modified by code written in a hardware description language.

14. The method according to claim 13 wherein the generating step generates each said instance of the circuit as a netlist which is modified to reflect the number and properties of said capture and emission sites of each device.

15. Code, which when executed by a circuit simulator, performs the method of any preceding claim.

Figure 1

EP 2 509 011 A1

EP 2 509 011 A1

INPUT

**20**
Trap & sim parameters (config file)

**10**
Circuit
- standard netlist + model card card)

**50**
FET model (BSIM4/Verilog-A)
A
Trap kinetics

**30**
Control script (perl)

**60**
HSPICE or SPECTRE + Verilog-A

OUTPUT

**40**
Circuits (enhanced netlists)

**70**
Circuit performance metrics

Figure 2

Figure 3

Figure 4

S1 (Start)

S2 Identify New Device → S3 Identify New Defect

S4 High or Low Vgs?

High → S5H Get SeedHigh for this Defect

Low → S5L Get SeedLow for this Defect

S6H Random Number=rand(SeedHigh)

S6L Random Number=rand(SeedLow)

S7H New Seed=f(Random Number)

S7L New Seed=f(Random Number)

S8H Store New Seed as SeedHigh

S8L Store New Seed as SeedLow

No

No

S10 Finished with Devices?

S9 Finished with Defects?

Yes

Yes → S11 (End)

Figure 5

Figure 6a

Figure 6b

Figure 7a

Figure 7b

Figure 7c

(a)                                    (b)

Figure 8

EP 2 509 011 A1

Figure 9a

Figure 9b

110

PTM 32nm
Model Card

100
Circuit
Netlist

120
NBTI Annotation
Script (universal)

130
Annotated
Netlist

170
BSIM4 Model
in Verilog-A

140
Workload
Scenarios

Stimuli Setup Script
(circuit dependent)

160
Circuit Simulator

150

190
Performance
Metrics

180
NBTI Model
in Verilog-A

Figure 10

Figure 11a

Figure 11b

Figure 12(a)

Figure 12(b)

Europäisches
Patentamt
European
Patent Office
Office européen
des brevets

# EUROPEAN SEARCH REPORT

Application Number

EP 12 16 3404

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TONG BOON TANG ET AL: "Methodology of Statistical RTS Noise Analysis With Charge-Carrier Trapping Models", IEEE TRANSACTIONS ON CIRCUITS AND SYSTEMS I: REGULAR PAPERS, IEEE, US, vol. 57, no. 5, 1 May 2010 (2010-05-01), pages 1062-1070, XP011333668, ISSN: 1549-8328, DOI: 10.1109/TCSI.2010.2043988 * the whole document * | 1-15 | INV. G06F17/50 |
| X | PING-CHUNG LI ET AL: "iProbe-d: a hot-carrier and oxide reliability simulator", RELIABILITY PHYSICS SYMPOSIUM, 1994. 32ND ANNUAL PROCEEDINGS., IEEE IN TERNATIONAL SAN JOSE, CA, USA 11-14 APRIL 1994, NEW YORK, NY, USA,IEEE, NEW YORK, NY, USA, 11 April 1994 (1994-04-11), pages 274-279, XP031819560, ISBN: 978-0-7803-1357-6 * the whole document * | 1-15 | |
| | | | TECHNICAL FIELDS SEARCHED (IPC) |
| X | KACZER B ET AL: "Statistics of Multiple Trapped Charges in the Gate Oxide of Deeply Scaled MOSFET Devicesâ Application to NBTI", IEEE ELECTRON DEVICE LETTERS, IEEE SERVICE CENTER, NEW YORK, NY, US, vol. 31, no. 5, 1 May 2010 (2010-05-01), pages 411-413, XP011306758, ISSN: 0741-3106 * the whole document * | 1-15 | G06F |

The present search report has been drawn up for all claims

| Place of search | Date of completion of the search | Examiner |
|---|---|---|
| Munich | 9 August 2012 | Radev, Boyan |